# DEMANDE DE BREVET EUROPEEN

(11) **EP 1 640 567 A1**
(43) Date de publication de la demande: **29.03.2006**
(21) Numéro de dépôt: 05300769.6
(22) Date de dépôt: 23.09.2005
(51) Int. Cl.: F01L 1/26, F01L 13/00, F01L 1/46

(54) **Moteur comprenant une culasse présentant au moins un conduit d'admission de gaz**

(30) Priorité: 23.09.2004 FR 0410063
(71) Demandeur: Renault s.a.s., 92100 Boulogne Billancourt (FR)
(72) Inventeur: ANTHOINE, Pierre, 92500, Rueil Malmaison (FR); DUPONT, Alain, 78860, Saint Nom la Breteche (FR); GUERINEAU, Thomas, 92190, Meudon (FR)

(57) **Abrégé**

Le moteur 2 comporte une culasse qui présente au moins un cylindre 4 et un conduit 6,8 d'admission de gaz, le conduit présentant une face 32 dissymétrique et inclinée par rapport à un axe 16 du conduit de façon à favoriser un écoulement de gaz suivant une direction circonférentielle du cylindre.

## Description

L'invention concerne les moteurs à combustion interne pour véhicule automobile.

On sait que, dans les moteurs diesel à injection directe, il est préférable que l'injection des gaz dans le cylindre ait lieu avec un mouvement circonférentiel autour de l'axe du cylindre, mouvement appelé « swirl ». Ce mouvement assure en effet un mélange correct entre l'air et le carburant. Ce mouvement peut être produit à l'aide de différentes architectures de système d'admission. Le besoin s'en fait surtout ressentir pour les faibles charges. En revanche, l'augmentation du swirl est généralement associée à une chute importante de la perméabilité du cylindre. C'est la raison pour laquelle, pour fournir une perméabilité correcte, on a souvent recours à des motifs comportant deux soupapes d'admission par cylindre. Différents motifs de soupape d'admission peuvent être utilisés qui se caractérisent en général par l'angle formé, dans un plan perpendiculaire à l'axe du cylindre, entre le plan de la face d'entrée de la culasse et la droite passant par le centre des soupapes d'admission. En raison de l'architecture très compacte de ces culasses, une des difficultés consiste alors à obtenir une direction des conduits qui soit favorable à la création d'un mouvement circonférentiel naturel. Dans certaines architectures, on constate qu'une partie importante de l'écoulement de l'un des conduits part dans un sens de rotation contraire à celui du mouvement circonférentiel principal. Pour pallier cela, on peut adopter une géométrie de conduit qui contraigne fortement l'écoulement pour le diriger le plus possible vers le centre du cylindre. Toutefois, cette solution pénalise fortement la perméabilité, notamment pour les fortes charges.

Le document US-4 974 566 présente à la figure 8a l'utilisation d'un masque qui permet d'orienter l'écoulement dans le sens du mouvement circonférentiel principal. Toutefois, cet agencement présente des inconvénients.

Par ailleurs, on a proposé de disposer en amont des conduits des organes de type papillon ou boisseau pour favoriser l'écoulement. Toutefois, l'installation de tels organes n'est pas toujours possible. De plus, ces organes peuvent générer des pertes de charge supplémentaires.

Un but de l'invention est de favoriser le mouvement de circulation circonférentiel.

A cet effet, on prévoit selon l'invention un moteur comportant une culasse présentant au moins un cylindre et un conduit d'admission de gaz, une extrémité du conduit présentant une face dissymétrique et inclinée par rapport à un axe du conduit de façon à favoriser un écoulement de gaz suivant une direction circonférentielle du cylindre.

Ainsi, cette face permet d'orienter l'écoulement dans le sens du mouvement circonférentiel sans mettre en péril la perméabilité.

Le moteur selon l'invention pourra présenter en outre au moins l'une quelconque des caractéristiques suivantes :
- la face s'étend sur moins d'un tour autour de l'axe ;
- la face s'étend sur moins de deux tiers de tour autour de l'axe ;
- la face présente une largeur non uniforme autour de l'axe ;
- la face a une forme de croissant ;
- il comprend une soupape associée au conduit et des moyens de commande de la soupape agencés de sorte que la soupape peut suivre une première loi de mouvement et une deuxième loi de mouvement dans laquelle une position extrême de la soupape est plus éloignée du conduit que dans la première loi ;
- le conduit présente une portion formant un étranglement ; et
- le nombre de conduits d'admission débouchant dans le cylindre est au moins égal à deux, chaque conduit présentant la face.

D'autres caractéristiques et avantages de l'invention apparaîtront encore dans la description suivante d'un mode préféré de réalisation donné à titre d'exemple non limitatif en référence aux dessins annexés sur lesquels :
- les figures 1 et 2 sont deux vues respectivement en perspective et en plan d'une culasse d'un moteur selon l'invention, illustrant deux conduits d'admission de gaz ;
- la figure 3 est une vue en coupe axiale de la partie basse de l'un des conduits de la culasse des figures précédentes ; et
- la figure 4 illustre deux lois de levée de soupape du moteur des figures précédentes.

En référence aux figures, le moteur 2 décrit dans le mode préféré de réalisation de l'invention est un moteur diesel pour véhicule à injection directe comprenant par exemple quatre cylindres 4. Dans chaque cylindre est mobile à coulissement un piston non illustré. Ce moteur à combustion interne comprend pour chaque cylindre deux conduits d'admission 6, 8 et deux conduits d'échappement non illustrés. Ces conduits d'admission permettent l'introduction dans le cylindre au sein de la chambre de combustion de l'air destiné à être mélangé avec le carburant.

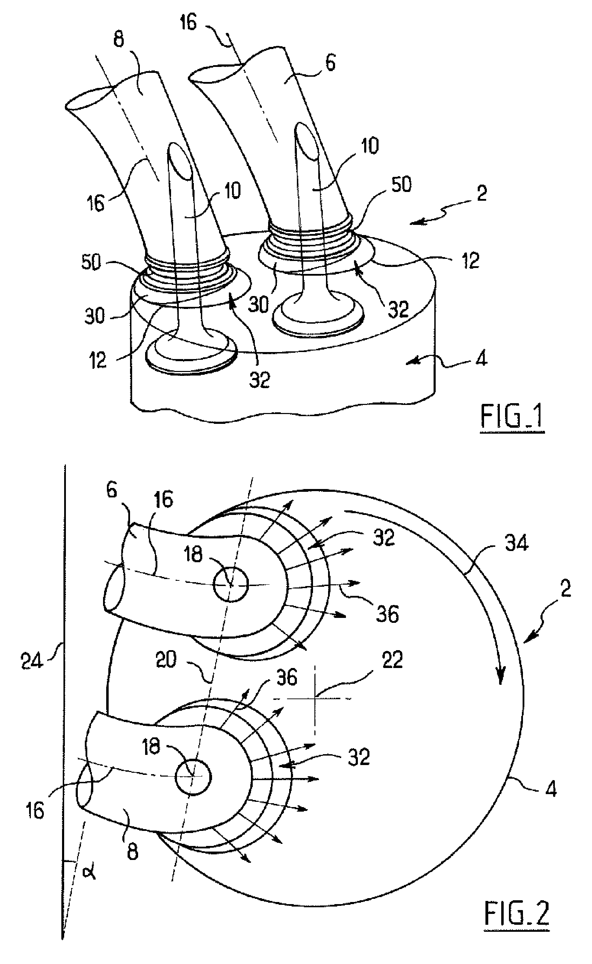

A chaque conduit d'admission 6,8 est associée une soupape respective 10 mobile entre une position haute dans laquelle elle obture une extrémité aval basse 12 du conduit contiguë au cylindre et une position basse dans laquelle elle s'étend dans le cylindre à distance de cette extrémité. C'est cette dernière position qui est illustrée à la figure 1.

Chaque conduit d'admission 6, 8 présente un axe longitudinal 16. Cet axe passe par le centre 18 de la soupape 10 correspondante.

On désigne par la référence numérique 20 la droite passant par le centre 18 des deux soupapes. Si l'on considère un plan perpendiculaire à un axe principal 22 du cylindre 4, la droite 20 fait dans ce plan un angle α avec une droite 24 qui constitue la trace dans ce plan de la face d'entrée du moteur. Le plan ici considéré est en fait celui de la figure 2 sur laquelle l'angle α a été représenté. L'angle α sera de préférence compris entre 0 et 15°. Il est dans le présent exemple de 0°. Néanmoins, il a été représenté sur la figure 2 avec une valeur non nulle pour la clarté de l'illustration. L'angle α correspond également à l'inclinaison de la droite 20 par rapport à l'axe du moteur, c'est-à-dire l'axe de son vilebrequin.

Pour chacun des conduits 6, 8, l'extrémité 12 du conduit comprend une face 30 de forme générale tronconique.

Néanmoins, conformément à l'invention, cette face 30 est ici entamée par une face 32 dissymétrique par rapport à l'axe 16 et destinée à favoriser un écoulement de gaz suivant une direction circonférentielle 34 du cylindre autour de l'axe 22 illustrée à la figure 2. Cette face pourra avoir une forme en portion de cône ou de cylindre. La face 32 est inclinée par rapport à l'axe 16. Autrement dit, chaque génératrice de cette face, qu'il s'agisse d'un cône ou d'un cylindre, est inclinée par rapport à l'axe 16 dans le plan formé par cet axe et la génératrice en question. Ces génératrices correspondent sensiblement aux flèches 36 illustrées à la figure 2 pour montrer la direction de l'écoulement du gaz en sortie des conduits 6,8.

Pour chaque conduit, la face 32 rompt la symétrie de l'écoulement du gaz autour de l'axe 16 pour favoriser une direction de cet écoulement qui correspond grosso modo à la plus longue flèche sur la figure 2 pour chacun des conduits. Ainsi, à la sortie du conduit 6, l'écoulement s'effectue en direction de la paroi pour favoriser une orientation circonférentielle ou circonférentielle des gaz comme illustré par la flèche 34. Pour le conduit 8, la direction favorisée est dirigée globalement vers le centre du cylindre et ne vient donc pas contrecarrer l'écoulement circonférentiel 34 par un écoulement en sens contraire.

La face 32 s'étend sur chaque conduit sur moins d'un tour autour de l'axe 16 et de préférence sur moins de 2/3 de tour. Elle correspond en l'espèce à la moitié d'un tour. Cette face a une largeur non uniforme lorsqu'on parcourt la face autour de l'axe 16. La largeur est ici mesurée suivant la direction de chaque génératrice. Dans le présent exemple, la face a une forme de croissant.

La face 12 est réalisée par usinage, par exemple. La face 32 sera réalisée sur au moins l'un des conduits et de préférence sur chacun des conduits 6 et 8. Sur chacun de ces conduits, la face dégage de façon privilégiée l'écoulement en sortie de soupape dans une direction vers laquelle on veut conditionner cet écoulement.

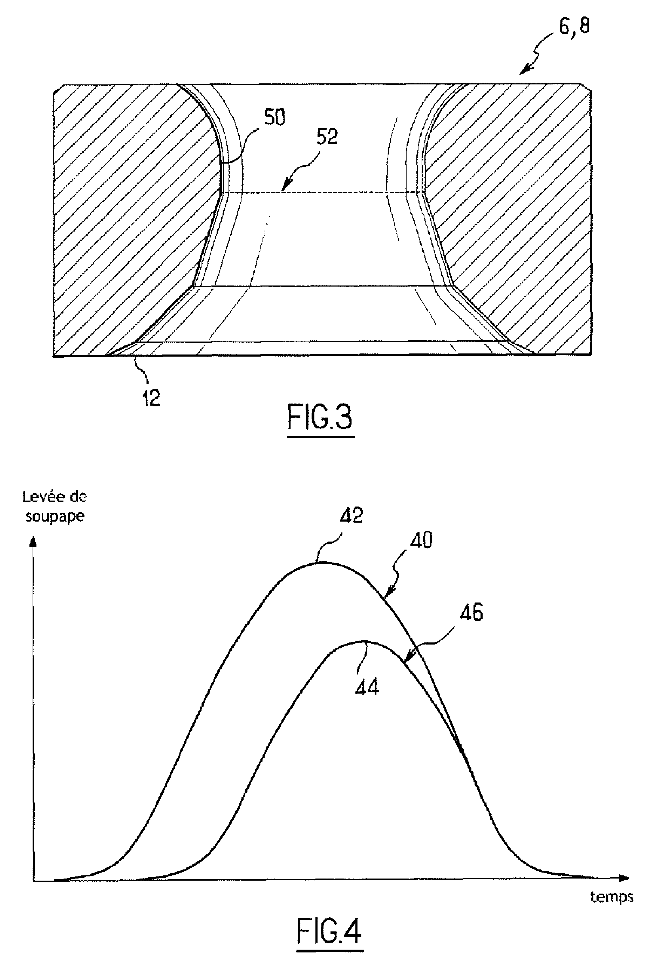

Le moteur comprend des moyens de commande du moteur comprenant notamment un calculateur. Ces moyens sont aptes entre autres choses à commander le mouvement de chaque soupape selon l'une ou l'autre parmi deux lois différentes. Chacune des lois a été illustrée à la figure 4 qui montre la position de la soupape en ordonnée lors de son mouvement de coulissement, en fonction du temps indiqué en abscisse. Comme on le voit, dans la deuxième loi illustrée par la courbe 40, la position extrême 42 de la soupape correspondant à sa levée maximale est plus éloignée de l'extrémité 12 du conduit que dans la position extrême correspondante 44 de l'autre loi 46. Ainsi, la loi de soupape de chaque conduit est soit à forte levée, conformément à la courbe 40 pour augmenter la perméabilité, soit à faible levée, conformément à la courbe 46 pour augmenter le mouvement circonférentiel 34. Ces deux lois pourront être permises au niveau de l'un quelconque au moins des conduits, voire des deux.

L'association de la loi 46 avec la face inclinée 32 permet une amplification du mouvement circonférentiel 34. Lorsque la face 32 est associée à la loi 44 correspondant aux faibles levées, cette face 32 trouve toute son efficacité pour l'orientation de l'écoulement.

Comme illustré à la figure 3, au moins le conduit 6 parmi les deux conduits est muni d'un siège 50 formant un étranglement ou restriction de section pour l'écoulement. Ce siège présente ainsi une section 52 de diamètre minimal. Il adopte une forme convergente progressive jusqu'à ce col 52, puis présente un élargissement progressif qui s'achève au niveau de l'extrémité 12 par le siège de soupape. Ce siège a ainsi une forme de venturi. On pourra réaliser cet étranglement par une succession d'opérations d'usinage qui constitueront une succession de sections coniques.

Dans le présent exemple, les conduits 6 et 8 ont une forme classique, à savoir une forme droite. Le dessin de ces deux conduits leur confère une perméabilité de niveau satisfaisant. Le positionnement de la face 32 à l'entrée de la chambre de combustion lui permet pour chaque conduit de diriger préférentiellement l'écoulement lors des faibles levées de la soupape.

L'invention permet à la fois d'obtenir des niveaux de mouvement circonférentiel 34 élevés et de conserver une bonne perméabilité pour les fortes charges. Elle permet de faire varier le mouvement circonférentiel et d'augmenter ce mouvement au moyen des lois de soupape et de la face 32 en conférant au moteur une bonne répétabilité.

Bien entendu, on pourra apporter à l'invention de nombreuses modifications sans sortir du cadre de celle-ci.

## Revendications

1. Moteur (2) comportant une culasse présentant au moins un cylindre (4) et un conduit (6, 8) d'admission de gaz, **caractérisé en ce qu'**une extrémité du conduit présente une face (32) dissymétrique et inclinée par rapport à un axe (16) du conduit de façon à favoriser un écoulement de gaz suivant une direction circonférentielle du cylindre (4).

2. Moteur selon la revendication précédente, **caractérisé en ce que** la face (32) s'étend sur moins d'un tour autour de l'axe (16).

3. Moteur selon l'une quelconque des revendications précédentes, **caractérisé en ce que** la face (32) s'étend sur moins de deux tiers de tour autour de l'axe.

4. Moteur selon l'une quelconque des revendications précédentes, **caractérisé en ce que** la face (32) présente une largeur non uniforme autour de l'axe (16).

5. Moteur selon l'une quelconque des revendications précédentes, **caractérisé en ce que** la face (32) a une forme de croissant.

6. Moteur selon l'une quelconque des revendications précédentes, **caractérisé en ce qu'**il comprend une soupape (10) associée au conduit (6, 8) et des moyens de commande de la soupape agencés de sorte que la soupape (10) peut suivre une première loi de mouvement (46) et une deuxième loi de mouvement (40) dans laquelle une position extrême (42) de la soupape est plus éloignée du conduit que dans la première loi.

7. Moteur selon l'une quelconque des revendications précédentes, **caractérisé en ce que** le conduit (6, 8) présente une portion (50) formant un étranglement.

8. Moteur selon l'une quelconque des revendications précédentes, **caractérisé en ce que** le nombre de conduits d'admission (6, 8) débouchant dans le cylindre (4) est au moins égal à deux, chaque conduit présentant la face (32).

9. Véhicule **caractérisé en ce qu'**il comprend un moteur selon l'une quelconque des revendications précédentes.
